(19) Europäisches Patentamt
European Patent Office
Office européen des brevets

(11) Veröffentlichungsnummer: **0 235 077 B1**

(12) # EUROPÄISCHE PATENTSCHRIFT

(45) Veröffentlichungstag der Patentschrift: **19.09.90**

(51) Int. Cl.[5]: **C08G 59/68**, C08G 59/22, C08G 59/70, H01B 3/40

(21) Anmeldenummer: **87810016.3**

(22) Anmeldetag: **12.01.87**

(54) **Härtbare Gemische auf Basis von Diglycidylverbindungen und Metallkomplexverbindungen.**

(30) Priorität: **17.01.86 CH 191/86**
**19.11.86 CH 4616/86**

(43) Veröffentlichungstag der Anmeldung:
**02.09.87 Patentblatt 87/36**

(45) Bekanntmachung des Hinweises auf die Patenterteilung:
**19.09.90 Patentblatt 90/38**

(84) Benannte Vertragsstaaten:
**CH DE FR GB IT LI NL SE**

(56) Entgegenhaltungen:
**EP-A- 0 028 583**
**FR-A- 2 243 975**
**US-A- 3 379 653**

(73) Patentinhaber: **CIBA-GEIGY AG, Klybeckstrasse 141, CH-4002 Basel(CH)**
(84) Benannte Vertragsstaaten: **CH FR GB IT LI NL SE**

(73) Patentinhaber: **CIBA-GEIGY GmbH, Oeflinger Strasse 44, D-7867 Wehr/Baden(DE)**
(84) Benannte Vertragsstaaten: **DE**

(72) Erfinder: **Rabener, Claus Willi, Dr., Schmiedackerstrasse 21, D-7858 Oetlingen(DE)**
Erfinder: **Hörner, Hans-Peter, Dr., Hachbergstrasse 3, D-7867 Wehr 1(DE)**
Erfinder: **Baumann, Dieter, Bürklistrasse 6, D-4313 Möhlin(DE)**

**EP 0 235 077 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft härtbare Gemische auf Basis bestimmter Diglycidylverbindungen und Metallkomplexverbindungen und deren Verwendung als transparente Form- und Überzugsmassen, insbesondere zum Umhüllen oder Einbetten von optoelektronischen Bauelementen.

Transparente Gießharzmassen auf Basis von Diglycidylverbindungen für optoelektronische Bauteile sind bekannt, beispielsweise aus den DE-Offenlegungsschriften 3 016 097, 3 016 103 und 3 151 540. Die darin offenbarten Gießharzmassen stellen mit einem Härtungsbeschleuniger versehene anhydridhärtbare Epoxidharzmassen dar. Für bestimmte Anwendungen, insbesondere für die maschinelle Verarbeitung, sind solche Gießharzsysteme bezüglich der Formbelegungszeiten nicht immer optimal.

Es ist ferner bekannt, Lewissäuren oder deren Komplexe mit Wasser oder organischen Verbindungen als Härtungsmittel oder Härtungsbeschleuniger für Epoxidharze einzusetzen. So wird beispielsweise in der FR-A 2 243 975 ein Verfahren zur Herstellung von Epoxidharzschaumstoffen offenbart, wobei eine bestimmte Epoxidharzmischung, die außerdem den Tetraglycidylester der Cyclohexanon- oder Methylcyclohexynon-tetrapropionsäure enthalten muß, mit einer Lewissäure oder einer Additions- oder Komplexverbindung einer Lewissäure gehärtet wird.

In US-A 3 379 653 werden cycloaliphatische Epoxidharze, die mindestens eine 1,2-Epoxidgruppe am cycloaliphatischen Ring enthalten, mit einem Gemisch aus Metallfluorboraten und Komplexen aus $BF_3$ gehärtet.

Aus der EP-A 0 028 583 ist es bekannt, Epoxidharze mit Carbonsäureanhydriden in Gegenwart von Zinkfluorboratkomplexen zu härten.

Es wurde nun gefunden, daß Gießharzmassen aus bestimmten Bisphenoldiglycidylethern, eines sterisch gehinderten Phenols oder eines bestimmten Phosphits und bestimmten Metallkomplexverbindungen einerseits sehr schnell ausgehärtet werden können, das heißt, sie weisen kürzere Gelier- und Anhärtungszeiten auf und ermöglichen dadurch sehr kurze Formbelegungszeiten, und andererseits weder bei der Aushärtung noch bei der Lagerung vergilben.

Gegenstand der vorliegenden Erfindung sind somit härtbare Gemische, enthaltend

(a) mindestens einen Bisphenoldiglycidylether auf Basis von Bisphenol A, hydriertem Bisphenol A oder Bisphenol F,

(b) als Härtungskatalysator 0,01 bis 5 Gew.-Teile pro 100 Gew.-Teile (a) einer farblosen oder schwachgelben Lösung einer Metallkomplexverbindung der Formel I

$$[Me\,(H_2O)_x\,(Lm)_y]^{2+}\,(A^{\ominus})^2 \qquad (I),$$

worin

Me ein zweiwertiges Metall aus der Gruppe Zn, Cd, Sn, Pb, Ca oder Mg, Lm einen gesättigten cyclischen Ether mit 5 bis 7 Ringatomen, eine lineare oder cyclische gesättigte aliphatische Etherverbindung oder ein Gemisch aus dem Ether und der Etherverbindung, wobei der Ether und die Etherverbindung einen Siedepunkt von mindestens 60°C aufweisen, und

A ein Anion der Formel $BF_4^{\ominus}$, $PF_6^{\ominus}$, $AsF_6^{\ominus}$ oder $SbF_6^{\ominus}$ bedeuten,

x für die Zahl 4, 5 oder 6 und y für Null oder die Zahl 1 oder 2 stehen, wobei die Summe aus x und y jeweils 6 ist, gelöst im Überschuß des entsprechenden Ethers oder der entsprechenden Etherverbindung,

(c) 0,2 bis 5 Gew.-Teile pro 100 Gew.-Teile (a) eines sterisch gehinderten ein- oder mehrkernigen Phenols, eines Phosphits der Formel II oder III

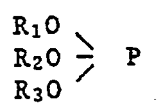

(II) oder

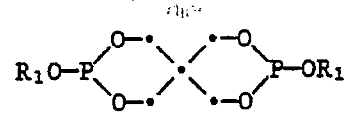

(III),

worin $R_1$, $R_2$ und $R_3$ unabhängig voneinander je für ein Phenyl, alkylsubstituiertes Phenyl mit 1–12 C-Atomen im Alkylrest oder ein Alkyl mit 1 bis 20 C-Atomen stehen, oder eines Gemisches aus einem sterisch gehinderten ein- oder mehrkernigen Phenol und einem Phosphit der Formel II oder III und gegebenenfalls

(d) als reaktiven Verdünner bis zu 25 Gew.-Teile, bezogen auf 100 Gew.-Teile (a), mindestens eines Diglycidylethers von Butandiol-1,4, Hexandiol-1,6 oder Neopentylglykol oder eines Kresolglycidylethers und gegebenenfalls

(e) als Haftvermittler 0,01–0,5 Gew.-Teile pro 100 Gew.-Teile (a) eines organischen Silans, Titanats oder Zirkonats.

Vorzugsweise enthalten die erfindungsgemäßen Gemische als Komponente (c) ein sterisch gehindertes ein- oder mehrkerniges Phenol und als reaktiven Verdünner (d) 15 Gew.-Teile, bezogen auf 100 Gew.-Teile (a), mindestens einen Diglycidylether von Butandiol-1,4, Hexandiol-1,6 oder Neopentylglykol.

Ferner enthalten die erfindungsgemäßen Gemische vorzugsweise die Komponenten (a), (b), (c) und (d).

Als Komponente (a) enthalten die erfindungsgmäßen Gemische vorzugsweise einen Bisphenol A-diglycidylether, einen hydrierten Bisphenol A-diglycidylether oder eine Mischung aus einem Bisphenol A-diglycidylether und einem Bisphenol F-diglycidylether, insbesondere einen Bisphenol A-diglycidylether oder eine Mischung aus einem Bisphenol A- und einem Bisphenol F-diglycidylether.

Die erfindungsgemäßen Gemische enthalten als Metallkomplexverbindung (b) vorzugsweise solche, worin in der Formel I Me für Zn und A für $BF_4^{\ominus}$ stehen.

In der Formel I sind als gesättigte cyclische Ether mit 5 bis 7 Ringatomen beispielsweise Tetrahydrofuran, Tetrahydropyran, 1,3-Dioxolan oder Hexamethylenoxid geeignet.

Geeignete lineare gesättigte aliphatische Etherverbindungen sind beispielsweise Diethylenglykoldimethylether (Diglyme), Diethylenglykoldiethylether, Diethylenglykoldi-n-butylether, Triethylenglykoldimethylether (Triglyme), Triethylenglykoldiethylether, Triethylenglykoldi-n-butylether, Tetraethylenglykoldimethyleter (Tetraglyme), 2-Ethoxyethanol und geeignete cyclische gesättigte Etherverbindungen sind beispielsweise Tetrahxdrofurfurylalkohol, Bis-(tetrahydrofurfuryl)-ether und 2-(Tetrahydrofurfuryloxy)-tetrahydropyran.

Vorzugsweise bedeutet Lm in der Formel I einen gesättigten cyclischen Ether oder eine lineare gesättigte aliphatische Etherverbindung und insbesondere bedeutet Lm Tetrahydrofuran, Hexamethylenoxid oder Triglyme.

Ferner sind in den erfindungsgemäßen Gemischen auch solche Komplexverbindungen bevorzugt, worin in Formel I x für 4 und y für 2 stehen.

Die als Härtungskatalysatoren verwendeten Metallkomplexverbindungen der Formel I werden üblicherweise in katalytischen Mengen eingesetzt. Vorzugsweise beträgt die verwendete Menge 0,05 bis 3,5 Gewichtsteile, pro 100 Gewichtsteile Bisphenoldiglycidylether (a).

In der Regel verwendet man die Härtungskatalysatoren als 1–10 gewichts-%ige Lösung, vorzugsweise als 5–10 gewichts-%ige Lösung, wobei normalerweise der im Metallkomplex gebundene Ether und der als Lösungsmittel verwendete Ether identisch sind.

Die Metallkomplexverbindungen der Formel I stellen bekannte Verbindungen dar und können analog dem im EP-Patent 0 028 583 offenbarten Verfahren hergestellt werden, indem man zum Beispiel Metallfluorid mit $BF_3$, $PF_5$, $AsF_5$ oder $SbF_5$ in Gegenwart einer stöchiometrischen Menge Wasser in einem komplexierenden Ether oder einer komplexierenden Etherverbindung (Lm) bei erhöhter Temperatur reagieren läßt.

Als sterisch gehinderte ein- oder mehrkernige Phenole (c) können dem erfindungsgemäßen Gemisch beispielsweise folgende Verbindungen zugesetzt werden:
2,6-Di-tert.-butyl-4-methylphenol, 2-tert.-Butyl-4,6-dimethylphenol, 2,6-Di-tert.-butyl-4-ethylphenol, 2,6-Di-tert.-butyl-4-n-butylphenol, 2,6-Di-tert.-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.-butyl-4-methoxymethylphenol, 2,6-Di-tert.-butyl-4-methoxyphenol, 2,6-Diphenyl-4-octadecyloxyphenol, 2,2'-Thio-bis-(6-tert.-butyl-4-methylphenol), 2,2'-Thio-bis-(4-octylphenol), 4,4'-Thio-bis-(6-tert.-butyl-3-methylphenol), 4,4'-Thio-bis-(6-tert.-butyl-2-methylphenol), 2,2'-Methylen-bis-(6-tert.-butyl-4-methylphenol), 2,2'-Methylen-bis-(6-tert.-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2-Methylen-bis-(4,6-di-tert.-butylphenol), 2,2'-Ethyliden-bis-(4,6-di-tert.-butylphenol), 2,2'-Ethyliden-bis-(6-tert.-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis-(2,6-di-tert.-butylphenol), 4,4'-Methylen-bis-(6-tert.-butyl-2-methylphenol), 1,1-Bis-(5-tert.-butyl-4-hydroxy-methylphenyl)-butan, 2,6-Di-(3-tert.-butyl-5-methyl-2-hydroxybenzyl)-4-methylphenol, 1,1,3-Tris-(5-tert.-butyl-4-hydroxy-2-methylphenyl)-butan, 1,1-Bis-(5-tert.-butyl-4-hydroxy-2-methylphenyl)-3-n-dodecylmercaptobutan , Ethylenglycol-bis-[3,3-bis(3'-tert.-butyl-4'-hydroxyphenyl)-butyrat], Di-(3-tert.-butyl-4-hydroxy-5-methylphenyl)-dicyclopentadien, Di-[2-(3'-tert.-butyl-2'-hydroxy-5'-methyl-benzyl)-6-tert.-butyl-4-methyl-phenyl]-terephthalat, 1, 3, 5-Tri-(3,5-di-tert.-butyl-4-hydroxybenzyl)-2,4,6-trimethylbenzol, Di-(3,5-di-tert.-butyl-4-hydroxybenzyl)-sulfid, 3,5-Di-tert.-butyl-4-hydroxybenzyl-mercaptoessigsäure-isooctylester, Bis-(4-tert.-butyl-3-hydroxy-2,6-dimethylbenzyl)dithiol-terephthalat, 1,3,5-Tris-(3,5-di-tert.-butyl-4-hydroxybenzyl)-isocyanurat, 1,3,5-Tris-(4-tert.-butyl-3-hydroxy-2,6-dimethylbenzyl)-isocyanurat, 3,5-Di-tert.-butyl-4-hydroxybenzyl-phosphonsäure-dioctadecylester, 3,5-Di-tert.-butyl-4-hydroxybenzyl-phosphonsäure-monoethylester, 2,4-Bis-octylmercapto-6-(3,5-di-tert.-butyl-4-hydroxyanilino)-s-triazin, N-2,5-Di-tert.-butyl-4-hydroxyphenyl-carbaminsäure-octylester sowie die Ester der β-(3,5-Di-tert.-butyl-4-hydroxyphenyl)-propionsäure mit ein- oder mehrwertigen Alkoholen, wie Methanol, Octadecanol, 1,6-Hexandiol, Neopentylglykol, Diethylenglykol, Triethylenglykol, Pentaerythrit oder Tris-hydroxyethylisocyanurat, wie beispielsweise Pentaerythrityl-tetrakis-[3-(3,5-di-tert.-butyl-4-hydroxyphenyl)-propionat], und ferner Ester der β-(5-tert.-Butyl-4-hydroxy-3-methylphenyl)-propionsäure mit ein- oder mehrwertigen Alkoholen.

Die oben genannten Phenole stellen bekannte Verbindungen dar, die zum Teil im Handel erhältlich sind.

Vorzugsweise verwendet man in den erfindungsgemäßen Gemischen solche Phenole, die in beiden ortho-Stellungen zur phenolischen Hydroxylgruppe je eine tert.-Butylgruppe aufweisen. Unter solchen Phenolen stellen die mehrkernigen, tert.-Butylgruppen enthaltenden Phenole besonders bevorzugte Phenole für die erfindungsgemäßen Gemische dar.

Die sterisch gehinderten Phenole werden den erfindungsgemäßen Gemischen vorzugsweise in Anteilen von 0,4 bis 3 Gewichtsteilen, insbesondere von 0,5 bis 2,5 Gewichtsteilen auf 100 Teile Bisphenoldiglycidyläther (a) zugesetzt.

Anstelle der genannten Phenole können die erfindungsgemäßen härtbaren Gemische auch Phosphite der Formel II oder Gemische aus den genannten Phenolen und den Phosphiten der Formel II in gleichen Gewichtsanteilen, bezogen auf die Komponente (a), enthalten.

Als Phosphite der Formel II enthalten die erfindungsgemäßen Gemische beispielsweise Triphenylphosphit, Tris-(2,4-di-tert.-butylphenyl)-phosphit, Tris-(p-nonylphenyl)-phosphit, Di-(hexyl)phenylphosphit, Di-(heptyl)phenylphosphit, Di-(octyl)phenylphosphit, Di-(nonyl)phenylphosphit, Di-(decyl)-phenylphosphit, Di-(undecyl)phenylphosphit oder Di-(dodecyl)phenylphosphit, und als Phosphite der Formel III sind beispielsweise Distearylpentaerythritdiphosphit und Di-(di-2,4-tert.-butylphenyl)-pentaerythritdiphosphit geeignet.

Vorzugsweise setzt man als Phospite der Formel II solche ein, worin $R_1$ für ein Phenyl steht und $R_2$ und $R_3$ je ein Alkyl mit 1 bis 12, insbesondere mit 6 bis 12 C-Atomen.

Die Phosphite der Formel II und III stellen bekannte Verbindungen dar und sind zum Teil im Handel erhältlich.

Die in den erfindungsgemässen Gemischen als reaktive Verdünner (d) einsetzbaren Diglycidylverbindungen stellen bekannte Verbindungen dar und werden den härtbaren Gemischen vorzugsweise dann zugegeben, wenn ihre Verarbeitung eine Viskosität von kleiner als 1200 mPa•s bedingt, beispielsweise bei der Verarbeitung als Spritzgussmasse. Vorzugsweise verwendet man als reaktiven Verdünner Hexandiol- oder Butandioldiglycidylether, insbesondere Hexandioldiglycidylether.

Als Silane, die gegebenenfalls den erfindungsgemässen Gemischen als Haftvermittler (e) zugesetzt werden können, kommen beispielsweise folgende Verbindungen in Frage:
Vinyltriethoxysilan, Vinyltrimethoxysilan, Vinyl-tris(β-methoxyethoxy)-silan, γ-Methacryloxypropyl-trimethoxysilan, γ-Methacryloxypropyl-tris-(2-methoxyethoxy)-silan, β-(3,4-Epoxycyclohexyl)-ethyltrimethoxysilan, γ-Glycidoxypropyl-trimethoxysilan, Vinyltriacetoxysilan, γ-Mercaptopropyl-trimethoxysilan, γ-Aminopropyltriethoxysilan und N-(β-Aminoethyl)-γ-aminopropyltrimethoxysilan.

Solche Verbindungen sind bekannt und im Handel von der Fa. Union Carbide als Silan-Haftvermittler erhältlich.

Als anorganische Titanate, die den erfindungsgemässen Gemischen gegebenenfalls als Haftvermittler (e) zugesetzt werden können sind beispielsweise folgende Verbindungen geeignet:
Isopropyl-triisostearoyltitanat, Isopropyl-dimethacrylisostearoyltitanat, Isopropyl-tri(dodecylbenzolsulfonyl)titanat, Isopropyltri(dioctylphosphato)titanat, Isopropyl-4-aminobenzolsulfonyldi(dodecylbenzolsulfonyl)titanat, Alkoxy-trimethacryltitanat, Isopropyl-tri(dioctylpyrophosphato)titanat, Alkoxytriacryltitanat, Isopropyl-tri(N-ethylamino-ethylamino)titanat, Titanate, die als Oxyacetat-Chelat-Typ vorliegen, wie beispielsweise Titanium-di(cumylphenylat)oxyacetat oder Titanium-di(dioctylpyrophosphat)-oxyacetat, Titanate, die als Ethylen-Chelat-Typ vorliegen, wie beispielsweise Di(dioctylphosphato)-ethylentitanat oder Di(dioctylpyrophosphato)ethylentitanat, oder cyclische Titanate, wie beispielsweise Dicyclo(dioctyl)pyrophosphatodioctyltitanat oder Dicyclo(dioctyl)pyrophosphatotitanat.

Die genannten Titanate sind ebenfalls bekannte Verbindungen und im Handel von der Fa. Kenrich Petrochemicals erhältlich.

Als organische Zirkonate, die gegebenenfalls den erfindungsgemäßen Gemischen als Haftvermittler (e) zugesetzt werden können, sind beispielsweise Neoalkoxy-tris(neodecanoyl)zirkonat, Neoalkoxy-tris-(dodecyl-benzolsulfonyl)zirkonat, Neoalkoxy-tris-(dioctyl)phosphatozirkonat, Neoalkoxy-tris(dioctyl)-pyrophosphatozirkonat, Neoalkoxy-tris(ethylendiamino)ethylzirkonat oder Neoalkoxy-tris(m-amino)-phenylzirkonat geeignet. Solche Verbindungen sind ebenfalls bekannt und im Handel von der Fa. Kenrich Petrochemicals erhältlich.

Die gegebenenfalls in den erfindungsgemäßen Gemischen enthaltenen Haftvermittler werden vorzugsweise in Anteilen von 0,01–0,3 und insbesondere von 0,01–0,1 Gewichtsteilen pro 100 Gewichtsteile Bisphenoldiglycidylether (a) zugesetzt. Von den genannten Haftvermittlern werden die organischen Silane bevorzugt eingesetzt, insbesondere solche, die eine Epoxidgruppe enthalten.

Den erfindungsgemäßen Gemischen können je nach Verwendungszweck noch weitere Zusätze zugegeben werden, wie Verlaufsmittel zur Erzielung von besseren Oberflächen bei Beschichtungen oder sogenannte Entlüfter, um eingeschlossene Luftblasen aus dem härtbaren Gemisch vor der Härtung zu entfernen. Verlaufsmittel sind im Handel erhältlich, beispielsweise unter der Bezeichnung "Silwett® L-77 oder L 76 023" von der Fa. UCC, "Fluorad® FC-430" von der Fa. 3M oder "Additol® XL 490/100" von der Fa. Vianova Kunstharz AG. Desgleichen werden im Handel Entlüftungsmittel angeboten, beispielsweise unter der Bezeichnung "Silicon-SH" oder "Silicon-SAG" der Fa. Wacker Chemie, "BYK

525" oder "BYK A500" der Fa. BYK-Mallincrodt oder "Anti-Mousse Rhodorsil® 411" der Fa. Rhone Poulenc.

Die erfindungsgemäßen Gemische können außerdem in bekannter Weise mit Farbpasten versehen werden, wobei diese die Transparenz der daraus hergestellten optoelektronischen Formstoffe nicht beeinträchtigen dürfen. Für Anwendungen auf dem Gebiet der Optoelektronik können den erfindungsgemäßen Gemischen gegebenenfalls auch Diffusorpasten zugesetzt werden, um in den optoelektronischen Formstoffen eine ausreichende Lichtstreuung zu erreichen.

Wie eingangs erwähnt, stellen die erfindungsgemäßen Gemische transparente Form- und Überzugsmassen dar, die im allgemeinen im Temperaturbereich von 100–140°C gehärtet werden können. Die Gelierzeiten der erfindungsgemäßen Gemische betragen in diesem Temperaturbereich zwischen 5 bis 30 Sekunden. Aufgrund ihrer Transparenz, Vergilbungsresistenz und Verarbeitungseigenschaften eignen sich die erfindungsgemäßen Mischungen insbesondere zur Herstellung von optoelektronischen Bauelementen, wie Leuchtdioden, Opto-Kopplern oder Displays. Bei dieser Verwendung ist es vorteilhaft, wenn die erfindungsgemäßen Gemische vor der Härtung eine Farbzahl nach der Gardener-Skala von kleiner als 2 aufweisen.

Gegenstand der vorliegenden Erfindung sind daher auch die Verwendung der erfindungsgemässen Gemische als Einkapselungs- oder Vergussmassen für die Herstellung von optoelektronischen Bauelementen sowie die mit den erfindungsgemässen Gemischen eingekapselten oder vergossenen optoelektronischen Bauelementen.

In den folgenden Beispielen wird die Erfindung näher erläutert.

Die in den Beispielen angegebenen Testmethoden werden wie folgt durchgeführt.

<u>Feuchtigkeitslagerungstest:</u> Die ausgehärteten Leuchtdioden werden 500 Stunden bei 85°C und einer relativen Luftfeuchtigkeit von 85 % gelagert. Die an die Dioden angelegte Spannung beträgt 4 V. Es wird der Anstieg des Sperrstromes gemessen. Eine Diode gilt als ausgefallen, wenn die Stromstärke auf Werte grösser als 10 µA ansteigt.

<u>Temperaturschocktest:</u> Die ausgehärteten Leuchtdioden werden abwechselnd während jeweils 15 Minuten in eine auf -10°C abgekühlte und dann in eine auf 90°C erwärmte Flüssigkeit getaucht. Es werden hierbei 100 Zyklen gefahren. Der Test gilt als bestanden, wenn keine Spannungsrisse im ausgehärteten Formstoff entstehen.

Herstellung des Zinktetrafluoroborat-Komplexes in Tetrahydrofuran (THF) $[Zn(H_2O)_4(THF)_2]^{2+}(BF_4^{\ominus})_2$

In einem mit Thermometer, Tropftrichter, Rührer und Gaseinleitungsrohr versehenen Sulfierkolben werden 113,7 g Zinkfluorid (1 Mol + 10 % Ueberschuss) in 317,28 g THF (4,4 Mol) bei Raumtemperatur dispergiert. Unter schwacher Argonspülung werden 207,68 g $BF_3{\cdot}2H_2O$ (2 Mol) während 2 Stunden so zugetropft, dass die Reaktionstemperatur nicht über 50°C steigt. Anschliessend lässt man das Reaktionsgemisch noch 2 Stunden nachreagieren. Dann gibt man unter Rühren zum Reaktionsgemisch bei 30°C 20 g Filtrierhilfsmittel zu und nutscht das Reaktionsgemisch unter Argonspülung über einen Weichfilter ab. Man erhält den Zinkkomplex in hellgelber, hochviskoser Lösung in 91%-iger Ausbeute. Der Zinkgehalt beträgt 101,2 mg Zn pro 1 g Lösung.

Herstellung des Zinktetrafluoroborat-Komplexes in Triethylen-glykol-dimethylether (Triglyme)

In einem mit Thermometer, Tropftrichter, Rührer und Gaseinleitungsrohr versehenen Sulfierkolben werden 103,4 g (1 Mol) Zinkfluorid in 178,22 g (1 Mol) Triglyme bei Raumtemperatur durch Rühren dispergiert. Unter schwacher Argonspülung werden 206,68 g $BF_3{\cdot}2H_2O$ während 4 Stunden so zugetropft, dass die Reaktionstemperatur 60°C nicht übersteigt. Anschliessend lässt man bei 50°C noch 2 Stunden nachreagieren. Die trübe Suspension wird über Nacht über eine kleine Säule mit $Al_2O_3$ filtriert.
Man erhält eine klare, mittelviskose Flüssigkeit, die einen Zinkgehalt von 126 mg Zn pro 1 g Lösung aufweist.

Herstellung des Zinktetrafluoroborat-Komplexes in Hexamethylenoxid

In einem mit Thermometer, Tropftrichter, Rührer und Gaseinleitungsrohr versehenen Sulfierkolben werden 99,2 g (0,96 Mol) Zinkfluorid in 384,6 g (3,84 Mol) Hexamethylenoxid bei Raumtemperatur durch Rühren dispergiert. Unter schwacher Argonspülung werden 199,3 g (1,92 Mol) $BF_3{\cdot}2H_2O$ so zugetropft, dass die Reaktionstemperatur 60°C nicht übersteigt. Nach 4 Stunden ist das Zutropfen beendet und man erhitzt die Reaktionslösung auf 60°C und lässt noch 2 Stunden nachreagieren. Die bräunliche trübe Lösung wird über eine kurze Säule mit einer Lage $Al_2O_3$ und Aktivkohle filtriert. Man erhält 470,42 g einer klaren, gelben dünnviskosen Flüssigkeit.

Beispiel 1

Mit einem Laborrührer werden 100 Gewichtsteile eines Bisphenol A-diglycidyletherharzes mit einem Epoxidgehalt von 5,6-5,7 Aequivalenten/kg und 10 Gewichtsteilen Hexandiol-1,6-diglycidylether mit einem Epoxidgehalt von 6,4-6,6 Aequivalenten/kg bei Raumtemperatur gemischt. Anschliessend wird die Temperatur dieser Harzmischung auf 80°C erhöht und bei dieser Temperatur wird 1 Gewichtsteil Pentaerythrityl-tetrakis-[3-(3,5-di-tert.-butyl-4-hydroxyphenyl)-propionat] während 20-30 Minuten eingerührt. Dann lässt man die Mischung wieder auf Raumtemperatur abkühlen.
100 Gewichtsteile der zuvor hergestellten Mischung werden nun bei Raumtemperatur mit 2 Gewichtsteilen eines Zinktetrafluoroboratkomplexes in Tetrahydrofuran (Zn-Gehalt 101,2 mg/g Lösung) vermischt. Bei Raumtemperatur beträgt die Gelierzeit dieser Reaktionsmischung etwa 10 Minuten. Die Reaktionsmischung wird innerhalb einer Minute mit einer Plastikspritze in 25 aus dem hochwärmeformbeständigen Thermoplast Poly-(methylpenten) bestehende Kavitäten für Leuchtdioden eingespritzt und bei 120°C geliert und angehärtet. Die Gelierzeit beträgt 20-25 Sekunden. Nach 1-2 Minuten Anhärtung werden die Leuchtdioden aus den Kavitäten entfernt und anschliessend noch 8 Stunden bei 120°C nachgehärtet. Man erhält dann farblose Formkörper, die auch nach einer Lagerung von 100 Stunden bei 120°C vergilbungsfrei bleiben und eine Glasumwandlungstemperatur von 130-140°C aufweisen. Die ausgehärteten Formkörper überstehen ebenso den Feuchtigkeitslagerungstest bei 85°C/85 % relativer Luftfeuchtigkeit während 500 Stunden sowie den Temperaturschocktest (100 mal Wechsel von -10 auf +90°C).

Beispiel 2

Beispiel 1 wird wiederholt und anstelle des Hexandioldiglycidylethers wird die gleiche Menge Butandiol-1,4-diglycidylether mit einem Epoxidgehalt von 8,9 Aequivalenten/kg eingesetzt. Die Eigenschaften der erhaltenen Formkörper entsprechen denen vom Beispiel 1.

Beispiel 3

Beispiel 1 wird wiederholt und anstelle des Hexandioldiglycidylethers wird die gleiche Menge Neopentylglykoldiglycidylether mit einem Epoxidgehalt von 7,3 Aequivalenten/kg eingesetzt. Die Eigenschaften der erhaltenen Formkörper entsprechen denen vom Beispiel 1.

Beispiel 4

Beispiel 1 wird mit dem Unterschied wiederholt, dass anstelle des Bisphenol A-diglycidyletherharzes mit einem Epoxidgehalt von 5,6-5,7 Aequivalenten/kg ein solches mit einem Epoxidgehalt von 5,1-5,4 Epoxidäquivalenten/kg eingesetzt wird. Die erhaltenen Formkörper weisen die gleichen Eigenschaften wie die gemäss Beispiel 1 erhaltenen Formkörper auf.

Beispiel 5

Beispiel 4 wird wiederholt und anstelle des Hexandioldiglycidylethers wird die gleiche Menge Butandioldiglycidylether eingesetzt. Die Eigenschaften der erhaltenen Formkörper entsprechen denen vom Beispiel 4.

Beispiel 6

Beispiel 4 wird wiederholt und anstelle des Hexandioldiglycidylethers wird die gleiche Menge Neopentyldiglycidylether verwendet. Die Eigenschaften der erhaltenen Formkörper entsprechen denen vom Beispiel 4.

Beispiel 7

Beispiel 1 wird wiederholt und anstelle des Bisphenol A-diglycidyletherharzes wird die gleiche Menge destilliertes Bisphenol F-diglycidyletherharz mit einem Epoxidgehalt von 6,0-6,4 Aequivalenten/kg verwendet. Die Eigenschaften der erhaltenen Formkörper entsprechen denen vom Beispiel 1.

Beispiel 8

Beispiel 7 wird wiederholt und anstelle des Hexandioldiglycidylethers wird die gleiche Menge Butandioldiglycidylether verwendet. Die Eigenschaften der erhaltenen Formkörper entsprechen denen vom Beispiel 7.

Beispiel 9

Beispiel 7 wird wiederholt und anstelle von Hexandioldiglycidylether wird die gleiche Menge Neopentylglykoldiglycidylether verwendet. Die Eigenschaften der erhaltenen Formkörper entsprechen denen vom Beispiel 7.

Beispiel 10

Beispiel 1 wird wiederholt und anstelle des Bisphenol A-diglycidyletherharzes wird die gleiche Menge eines hydrierten Bisphenol A-diglycidyletherharz mit einem Epoxidgehalt von 4,3-4,8 Aequivalenten/kg verwendet. Die Eigenschaften der erhaltenen Formkörper entsprechen denen vom Beispiel 1.

Beispiel 11

Beispiel 1 wird wiederholt und anstelle des Bisphenol A-diglycidyletherharzes wird die gleiche Menge einer Mischung aus 50 Gewichtsteilen eines Bisphenol A-diglycidyletherharzes mit einem Epoxidgehalt von 5,1-5,4 Aequivalenten/kg und 50 Gewichtsteilen eines destillierten Bisphenol F-diglycidyletherharzes mit einem Epoxidgehalt von 6,0-6,4 Aequivalenten/kg verwendet. Die Eigenschaften der erhaltenen Formkörper entsprechen denen vom Beispiel 1.

Beispiel 12

Beispiel 1 wird wiederholt und anstelle des Bisphenol A-diglycidyletherharzes wird die gleiche Menge einer Mischung aus 50 Gewichtsteilen eines Bisphenol A-diglycidyletherharzes mit einem Epoxidgehalt von 5,1-5,4 Aequivalenten/kg und 50 Gewichtsteilen eines hydrierten Bisphenol A-diglycidyletherharzes mit einem Epoxidgehalt von 4,3-4,8 Aequivalenten/kg verwendet. Die Eigenschaften der erhaltenen Formkörper entsprechen denen vom Beispiel 1.

Beispiel 13

Beispiel 1 wird wiederholt und anstelle des Bisphenol A-diglycidyletherharzes und von 10 Gewichtsteilen Hexandioldiglycidylether wird eine Mischung aus 55 Gewichtsteilen eines Bisphenol A-diglycidyletherharzes mit einem Epoxidgehalt von 5,1-5,4 Aequivalenten/kg, 30 Gewichtsteilen eines destillierten Bisphenol F-diglycidyletherharzes mit einem Epoxidgehalt von 6,0-6,4 Aequivalenten/kg und 14 Gewichtsteilen Hexandioldiglycidylether verwendet. Die Eigenschaften der Formkörper entsprechen denen vom Beispiel 1.

Beispiel 14

Beispiel 13 wird wiederholt und es werden zusätzlich zur härtbaren Mischung 0,1 Gewichts-% $\gamma$-Glycidyloxypropyl-trimethoxysilan zugegeben. Die Eigenschaften der erhaltenen Formkörper entsprechen denen vom Beispiel 1.

Beispiel 15

Beispiel 13 wird wiederholt und anstelle des Hexandiolglycidylethers werden 14 Gewichtsteile Butandiolglycidylether verwendet. Gleichzeitig werden 2 Gewichtsteile des Bisphenol A-diglycidyletherharzes durch die gleiche Menge Kresolglycidylether ersetzt. Die Viskosität des Reaktionsgemisches beträgt 600 mPas. Die Eigenschaften der erhaltenen Formkörper entsprechen denen vom Beispiel 1.

Beispiel 16

Beispiel 15 wird wiederholt und 3 Gewichtsteile des Bisphenol A-diglycidyletherharzes werden durch die gleiche Menge Di-(decyl)-phenylphosphit ersetzt, wobei die Gelierzeit des härtbaren Gemisches bei Raumtemperatur von 15 auf 75 Minuten verlängert wird. Bei 120°C entsprechen Gelier und Aushärtungszeit denen vom Beispiel 1. Die erhaltenen Formkörper weisen die gleichen Eigenschaften auf wie die gemäss Beispiel 1 erhaltenen Formkörper.

Beispiel 17

Beispiel 16 wird wiederholt und anstelle des Di-(decyl)-phenylphosphits wird die gleiche Menge Tris-(p-nonylphenyl)-phosphit eingesetzt. Ein 100 g Ansatz von Harz und Härter geliert bei Raumtemperatur in 9 Minuten. Die Gelierzeiten bei 100° und 120°C betragen 40 beziehungsweise 20 Sekunden. Mit den in Beispiel 1 angegebenen Härtungszeiten werden Formkörper erhalten, die die gleichen Eigenschaften wie die Formkörper gemäss Beispiel 1 aufweisen.

Beispiel 18

Beispiel 16 wird wiederholt und anstelle des Di-(decyl)-phenylphosphits wird die gleiche Menge Tris-(2,4-di-tert.-butylphenyl)-phosphit eingesetzt. Ein 100 g Ansatz von Harz und Härter geliert bei Raumtemperatur in 6 Minuten. Die Gelierzeiten betragen bei 100° und 120°C 27 beziehungsweise 17 Sekunden. Bei Anwendung der in Beispiel 1 angegebenen Härtungsbedingungen erhält man Formkörper, die die gleichen Eigenschaften wie die Formkörper gemäss Beispiel 1 aufweisen.

## Patentansprüche

1. Härtbare Gemische, enthaltend
(a) mindestens einen Bisphenoldiglycidylether auf Basis von Bisphenol A, hydriertem Bisphenol A oder Bisphenol F,
(b) als Härtungskatalysator 0,01 bis 5 Gew.-Teile pro 100 Gew.-Teile (a) einer farblosen oder schwachgelben Lösung einer Metallkomplexverbindung der Formel I

$$[Me\ (H_2O)_x\ (Lm)_y]^{2+}\ (A^{\ominus})_2 \qquad (I),$$

worin
Me ein zweiwertiges Metall aus der Gruppe Zn, Cd, Sn, Pb, Ca oder Mg,
Lm einen gesättigten cyclischen Ether mit 5 bis 7 Ringatomen, eine lineare oder cyclische gesättigte aliphatische Etherverbindung oder ein Gemisch aus dem Ether und der Etherverbindung, wobei der Ether und die Etherverbindung einen Siedepunkt von mindestens 60°C aufweisen, und
A ein Anion der Formel $BF_4^{\ominus}$, $PF_6^{\ominus}$, $AsF_6^{\ominus}$ oder $SbF_6^{\ominus}$ bedeuten,
x für die Zahl 4, 5 oder 6 und y für Null oder die Zahl 1 oder 2 stehen, wobei die Summe aus x und y jeweils 6 ist, gelöst im Überschuß des entsprechenden Ethers oder der entsprechenden Etherverbindung,
(c) 0,2 bis 5 Gew.-Teile pro 100 Gew.-Teile (a) eines sterisch gehinderten ein- oder mehrkernigen Phenols, eines Phosphits der Formel II oder III

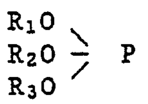

(II) oder

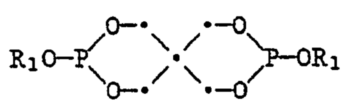

(III),

worin $R_1$, $R_2$ und $R_3$ unabhängig voneinander je für ein Phenyl, alkylsubstituiertes Phenyl mit 1–12 C-Atomen im Alkylrest oder ein Alkyl mit 1 bis 20 C-Atomen stehen, oder eines Gemisches aus einem sterisch gehinderten ein- oder mehrkernigen Phenol und einem Phosphit der Formel II oder III und gegebenenfalls
(d) als reaktiven Verdünner bis zu 25 Gew.-Teile, bezogen auf 100 Gew.-Teile (a), mindestens eines Diglycidylethers von Butandiol-1,4, Hexandiol-1,6 oder Neopentylglykol oder eines Kresolglycidylethers und gegebenenfalls
(e) als Haftvermittler 0,01 bis 0,5 Gew.-Teile pro 100 Gew.-Teile (a) eines organischen Silans, Titanats oder Zirkonats.

2. Gemische gemäß Anspruch 1, enthaltend als Komponente (c) ein sterisch gehindertes ein- oder mehrkerniges Phenol und als reaktiven Verdünner (d) 15 Gew.-Teile, bezogen auf 100 Gew.-Teile (a), mindestens einen Diglycidylether von Butandiol-1,4, Hexandiol-1,6 oder Neopentylglykol.

3. Gemische gemäß Anspruch 1, dadurch gekennzeichnet, daß sie als Komponente (a) einen Bisphenol A-diglycidylether, einen hydrierten Bisphenol A-diglycidylether oder eine Mischung aus einem Bisphenol A-diglycidylether und einem Bisphenol F-diglycidylether enthalten.

4. Gemische gemäß Anspruch 1, dadurch gekennzeichnet, daß sie eine Metallkomplexverbindung der Formel I enthalten, worin Lm für Tetrahydrofuran, Hexamethylenoxid oder Triethylenglykoldimethylether steht.

5. Gemische gemäß Anspruch 1, dadurch gekennzeichnet, daß sie eine Metallkomplexverbindung der Formel I enthalten, worin A für $BF_4^{\ominus}$, x für 4 und y für 2 stehen.

6. Gemische gemäß Anspruch 1, dadurch gekennzeichnet, daß sie als Komponente (c) ein in beiden ortho-Stellungen zur phenolischen Hydroxylgruppe je eine tert. Butylgruppe aufweisendes Phenol enthalten.

7. Gemische gemäß Anspruch 1, dadurch gekennzeichnet, daß sie als Komponente (e) ein organisches Silan mit einer Epoxidgruppe enthalten.

8. Verwendung eines Gemisches gemäß Anspruch 1 als Verguß- oder Einkapselungsmasse zur Herstellung von optoelektronischen Bauelementen.

9. Die mit den erfindungsgemäßen Gemischen gemäß Anspruch 1 eingekapselten oder vergossenen optoelektronischen Bauelemente.

**Claims**

1. A curable mixture, containing
(a) at least one bisphenol diglycidyl ether based on bisphenol A, hydrogenated bisphenol A or bisphenol F,
(b) as a curing catalyst, 0.01 to 5 parts by weight per 100 parts by weight of (a) of a colourless or slightly yellow solution of a metal complex compound of the formula I

$$[Me(H_2O)_x(Lm)_y]^{2+} (A^{\ominus})_2 \qquad (I),$$

in which
Me is a divalent metal from the group comprising Zn, Cd, Sn, Pb, Ca or Mg,
Lm is a saturated cyclic ether having 5 to 7 ring atoms, a linear cyclic saturated aliphatic ether compound or a mixture of the ether and the ether compound, the ether and the ether compound having a boiling point of at least 60°C, and
A is an anion of the formula $BF_4^{\ominus}$, $PF_6^{\ominus}$, $AsF_6^{\ominus}$ or $SbF_6^{\ominus}$, x is the number 4, 5 or 6 and y is zero or the number 1 or 2, the sum of x and y always being 6, the complex being dissolved in an excess of the corresponding ether or the corresponding ether compound,
(c) 0.2 to 5 parts by weight per 100 parts by weight of (a) of a sterically hindered mononuclear or polynuclear phenol, a phosphite of the formula II or III

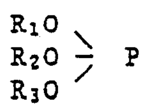

(II) or

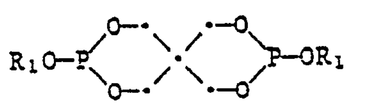

(III),

in which $R_1$, $R_2$ and $R_3$ independently of one another are each phenyl, alkyl-substituted phenyl having 1–12 carbon atoms in the alkyl radical or alkyl having 1 to 20 carbon atoms, or a mixture of a sterically hindered mononuclear or polynuclear phenol and a phosphite of the formula II or III and, if appropriate,
(d) as a reactive diluent, up to 25 parts by weight, relative to 100 parts by weight of (a), of at least one diglycidyl ether of 1,4-butanediol, 1,6-hexanediol or neopentyl glycol or a cresol glycidyl ether and, if appropriate,
(e) as an adhesion promoter, 0.01 to 0.5 parts by weight per 100 parts by weight of (a) of an organic silane, titanate or zirconate.

2. A mixture according to claim 1, containing, as the component (c) a sterically hindered mononuclear or polynuclear phenol and, as the reactive diluent (d), 15 parts by weight, relative to 100 parts by weight of (a), of at least one diglycidyl ether of 1,4-butanediol, 1,6-hexanediol or neopentyl glycol.

3. A mixture according to claim 1, which contains, as the component (a) a bisphenol A diglycidyl ether, a hydrogenated bisphenol A diglycidyl ether or a mixture of bisphenol A diglycidyl ether and a bisphenol F diglycidyl ether.

4. A mixture according to claim 1, which contains a metal complex compound of the formula I, in which Lm is tetrahydrofuran, hexamethylene oxide or triethylene glycol dimethyl ether.

5. A mixture according to claim 1, which contains a metal complex compound of the formula I, in which A is $BF_4^{\ominus}$, x is 4 and y is 2.

6. A mixture according to claim 1, which contains, as the component (c), a phenol which has a tertbutyl group in each of the two ortho-positions to the phenolic hydroxyl group.

7. A mixture according to claim 1, which contains, as the component (e), an organic silane with an epoxide group.

8. The use of a mixture according to claim 1 as a potting or encapsulating composition for the production of optoelectronic components.

9. An opto-electronic component encapsulated or potted with a mixture of the invention, according to claim 1.

## Revendications

1. Mélanges durcissables qui contiennent:
(a) au moins un éther diglycidylique d'un bis-phénol à base de bis-phénol A, de bis-phénol A hydrogéné ou de bis-phénol F,
(b) comme catalyseur de durcissement de 0,01 à 5 parties en poids, pour 100 parties en poids de (a), d'une solution incolore ou légèrement jaune d'un complexe métallique répondant à la formule I:

$$[Me\ (H_2O)_x\ (Lm)_y]^{2+}\ (A^{\ominus})_2 \qquad (I),$$

dans laquelle
Me représente un métal bivalent pris dans l'ensemble constitué par Zn, Cd, Sn, Pb, Ca et Mg,
Lm représente un éther cyclique saturé contenant de 5 à 7 atomes dans son cycle, un composé éther aliphatique saturé linéaire ou cyclique, ou un mélange de l'éther et du composé éther, l'éther et le composé éther ayant un point d'ébullition d'au moins 60°C,
A représente un anion de formule $BF_4^{\ominus}$, $PF_6^{\ominus}$, $AsF_6^{\ominus}$ ou $SbF_6^{\ominus}$,
x désigne un nombre égal à 4, à 5 ou à 6 et
y désigne un nombre égal à 0, à 1 ou à 2,
la somme
x + y étant à chaque fois égale à 6, dissous dans un excès de l'éther correspondant ou du composé éther correspondant,
(c) de 0,2 à 5 parties en poids, pour 100 parties en poids de (a), d'un phénol à empêchement stérique, à un ou à plusieurs noyaux, d'un phosphite répondant à l'une des formules II et III:

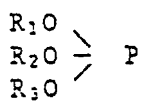

(II)

ou

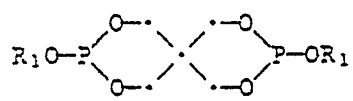

(III),

dans lesquelles $R_1$, $R_2$ et $R_3$ représentent chacun, indépendamment l'un de l'autre, un phényle, un alkylphényle dont l'alkyle contient de 1 à 12 atomes de carbone ou un alkyle contenant de 1 à 20 atomes de carbone, ou d'un mélange d'un phénol à empêchement stérique, à un ou à plusieurs noyaux, et d'un phosphite de formule II ou III, et éventuellement
(d) comme diluant réactif une quantité d'au plus 25 parties en poids, pour 100 parties en poids de (a), d'au moins un éther diglycidylique du butane-diol-1,4, de l'hexane-diol-1,6 ou du néopentyl-glycol, ou d'un éther glycidylique du crésol, et éventuellement
(e) comme adjuvant d'adhérence de 0,01 à 0,5 partie en poids, pour 100 parties en poids de (a), d'un silane, d'un titanate ou d'un zirconate organique.

2. Mélanges selon la revendication 1 qui contiennent, comme composante (c), un phénol à empêchement stérique, à un ou à plusieurs noyaux, et, comme diluant réactif (d), 15 parties en poids, pour 100 parties en poids de (a), d'au moins un éther diglycidylique du butane-diol-1,4, de l'hexane-diol-1,6 ou du néopently-glycol.

3. Mélanges selon la revendication 1, caractérisé en ce qu'ils contiennent, comme composante (a), un éther diglycidylique du bis-phénol A, un éther diglycidylique du bis-phénol A hydrogéné ou un mélange d'un éther diglycidylique du bis-phénol A et d'un éther diglycidylique du bis-phénol F.

4. Mélanges selon la revendication 1, caractérisés en ce qu'ils contiennent un complexe métallique de formule I dans lequel Lm représente le tétrahydrofuranne, l'oxépanne ou l'éther diméthylique du triéthylène-glycol.

5. Mélanges selon la revendication 1, caractérisé en ce qu'ils contiennent un complexe métallique de formule I dans lequel A représente $BF_4^{\ominus}$, x représente le nombre 4 et y représente le nombre 2.

6. Mélanges selon la revendication 1, caractérisé en ce qu'ils contiennent, comme composante (c), un phénol contenant un radical tert-butyle en chacune des deux positions ortho par rapport au radical hydroxy phénolique.

7. Mélanges selon la revendication 1, caractérisé en ce qu'ils contiennent, comme composante (e), un silane organique renfermant un radical époxy.

8. Application d'un mélange selon la revendication 1 comme matière de scellement ou d'encapsulage pour la fabrication de composants opto-électroniques.

9. Composants opto-électroniques scellés ou encapsulés avec les mélanges conformes à l'invention selon la revendication 1.